# EUROPÄISCHE PATENTSCHRIFT

(11) **EP 4 227 065 B1**
(45) Veröffentlichungstag und Bekanntmachung des Hinweises auf die Patenterteilung: **27.11.2024**
(21) Anmeldenummer: 22214970.0
(22) Anmeldetag: 20.12.2022
(51) Int. Cl.: B29C 49/42, B29C 49/46, B29C 49/06, B29C 49/36, B29K 67/00, B29L 31/00

(54) **VORRICHTUNG UND VERFAHREN ZUM HERSTELLEN VON KUNSTSTOFFBEHÄLTNISSEN MIT BEHÄLTNISDREHUNG AUF TRANSFERSTERNEN**
DEVICE AND METHOD FOR PRODUCING PLASTIC CONTAINERS WITH CONTAINER ROTATION ON TRANSFER STARS
DISPOSITIF ET PROCÉDÉ DE FABRICATION DE RÉCIPIENTS EN PLASTIQUE DOTÉS D'UNE ROTATION DE RÉCIPIENT SUR DES ÉTOILES DE TRANSFERT

(30) Priorität: 11.02.2022 DE 102022103317
(43) Veröffentlichungstag der Anmeldung: 16.08.2023
(73) Patentinhaber: Krones AG, 93073 Neutraubling (DE)
(72) Erfinder: Hirdina, Jochen, 93073 Neutraubling (DE)
(74) Vertreter: Hannke Bittner & Partner mbB Regensburg

(56) Entgegenhaltungen:
- EP-A2- 2 444 232
- DE-A1- 102010 018 154
- US-A1- 2012 151 883
- US-B2- 9 079 343

## Beschreibung

Die vorliegende Erfindung bezieht sich auf eine Vorrichtung und ein Verfahren zum Herstellen von Kunststoffbehältnissen. Aus dem Stand der Technik sind derartige Verfahren und Vorrichtungen seit langem bekannt. Dabei werden zunächst Kunststoffvorformlinge erwärmt und diese anschließend in Umformungseinrichtungen wie beispielsweise Blasformmaschinen zu Kunststoffbehältnissen umgeformt. Anschließend werden diese Behältnisse zu einer Fülleinrichtung transportiert, in der sie mit einem Füllgut, beispielsweise einem Getränk befüllt werden.

Dabei sind Umformungseinrichtungen bekannt, welche nicht herkömmliche Behältnisse mit kreisrundem Querschnitt produzieren, sondern mit hiervon abweichenden Querschnitten, beispielsweise ovalen oder rechteckigen Querschnitten.

Dabei besteht bei Anordnungen aus Blasformmaschinen und Füllern bei diesen Formflaschen, welche von kreisförmigen Querschnitten abweichende Querschnitte aufweisen das Problem, dass der Entnahmewinkel aus der Blasform nicht immer der benötigten Flaschenstellung in dem nachfolgenden Aggregat wie beispielsweise dem Füller entspricht. Dies ist beispielsweise der Fall, wenn in der Füllereinrichtung die kurze Seite einer rechteckigen Flasche zunächst zugeführt werden soll.

Im Stand der Technik wird dieses Problem damit behoben, dass zwischen der Blasformmaschine und der Füllereinrichtung ein Ausrichtmodul angeordnet ist, insbesondere direkt nach der Blasmaschine, in dem die geblasenen Behältnisse um einen definierten Winkel gedreht werden, um die gewünschte Ausrichtung in der Fülleinrichtung zu erreichen.

Solche Gattungsgemäße Vorrichtungen und Verfahren sind in den Patentschriften US2012/151883A1, US9079343B2, EP2444232A2 und DE102010018154A1 beschrieben.

Dieses Ausrichtemodul ist teuer und üblicherweise nur mit großem Aufwand nachrüstbar. Die Drehung der Behältnisse wird über Schrittmotoren durchgeführt oder aber über angetriebene Riemen und die Behältnisse müssen hierfür üblicherweise auf einen Dorn aufgesteckt werden.

Speziell für aseptische Anwendungen ist dieses Eingreifen in die Mündung nicht zulässig. Daher gibt es im internen Stand der Technik bis heute kein Ausrichtsystem für sterile Anwendungen. Dies führt zu großen Problemen bei Formflaschen, da die Winkelausrichtung über die Formtrennlinie der Blasformen erreicht werden muss. Dies wiederum führt häufig zu starken Hinterschnitten, welche beim Entformen zu Entnahmeproblemen führen bis hin zu Zerstörungen der Maschinen. Hohe Folgekosten sind die Folge hiervon (neue Formen, Spezialklammern, Reklamationskosten etc.).

Daher stellt sich der Erfindung die Aufgabe, ein Ausrichtsystem zur Verfügung zu stellen, welches auch in einem Isolator betrieben werden kann, d. h. in einem Reinraum und welches bevorzugt beständig gegen Sterilisationsmittel wie Wasserstoffperoxid ist. Daneben soll ein Ausrichtsystem zur Verfügung gestellt werden, welches im Vergleich zu vorbekannten Lösungen einfache gestaltet ist. Dabei soll weiterhin eine Möglichkeit geschaffen werden, um die Formtrennebene optimal bei auch aseptischen Formen legen zu können.

Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Herstellen von Kunststoffbehältnissen und insbesondere Getränkebehältnissen weist eine Umformungseinrichtung auf, welche Kunststoffvorformlinge zu Kunststoffbehältnissen umformt. Dabei weist die Umformungseinrichtung eine erste Transporteinrichtung auf, welche die Kunststoffvorformlinge während deren Umformung transportiert, sowie eine in der Transportrichtung der Kunststoffbehältnisse nach der Umformungseinrichtung angeordnete Fülleinrichtung, welche die Kunststoffbehältnisse mit einer Flüssigkeit befüllt.

Dabei weist die Vorrichtung eine zweite Transporteinrichtung auf, welche die Kunststoffbehältnisse von der Umformungseinrichtung zu der Fülleinrichtung transportiert, wobei die zweite Transporteinrichtungen wenigstens eine erste Transporteinheit und eine zweite Transporteinheit aufweist, welche die Kunststoffbehältnisse transportieren und wobei diese zwei Transporteinheiten jeweils einen bewegbaren Träger aufweisen, an dem jeweils eine Vielzahl von Greifeinrichtungen angeordnet ist, welche dazu geeignet und bestimmt sind die Kunststoffbehältnisse zu greifen.

Erfindungsgemäß sind diese Greifeinrichtungen jeweils schwenkbar gegenüber diesen Trägern angeordnet, derart das eine Greifeinrichtung mit einem von dieser Greifeinrichtung gehaltenen Kunststoffbehältnis um einen vorgegebenen Schwenkwinkel schwenkbar ist.

Es wird daher vorgeschlagen, dass, insbesondere unter Verzicht auf ein eigenes Ausrichtmodul, die Behältnisse von zwei Transporteinheiten gedreht werden, sodass die Drehung hier insbesondere schrittweise erfolgt. Auf diese Weise kann auf ein Ausrichtmodul, welches die Drehstellung der gefertigten Kunststoffbehältnisse ändert, verzichtet werden.

Wie oben erwähnt handelt es sich bei den Kunststoffbehältnissen insbesondere um Getränkebehältnisse. Es wäre jedoch auch die Abfüllung der Kunststoffbehältnisse mit einer anderen Substanz, beispielsweise Waschmitteln oder Seifen denkbar.

Im Rahmen der Erfindung wird daher vorgeschlagen, dass die Kunststoffbehältnisse nicht in einem Schritt gedreht werden, sondern im Wege mehrerer Transportschritte und insbesondere während sie von den besagten Greifeinrichtungen gehalten werden und/oder gemeinsam mit diesen Greifeinrichtungen. Es wird damit vorgeschlagen, dass die relativ gro-βe geforderte Drehbewegung der Kunststoffbehältnisse (beispielsweise 45°) in mehrere kleine Drehbewegungen aufgeteilt wird. Dies ist bei Blöcken aus Blasmaschine und Fülleinrichtungen relativ leicht möglich, da immer mehrere Transfereinheiten vorhanden sind, welche zwischen der Umformungseinrichtung, wie beispielsweise einer Blasformmaschine und der Fülleinrichtung angeordnet sind.

Durch diese Aufteilung kann die notwendige Drehung der Behältnisse von beispielsweise 30° auf 2x 15° oder auch von beispielsweise 45° auf 3x 15° aufgeteilt werden.

Diese jeweils geringen Winkelverschiebungen können über eine Drehung der Greifeinrichtungen bzw. Klammern in den Transfersternen realisiert werden. Dies bedeutet, dass die Kunststoffbehältnisse fest in den Greifeinrichtung bleiben (und sich insbesondere nicht gegenüber der jeweiligen Greifeinrichtung drehen) und die Greifeinrichtung bzw. Klammer selbst wird um beispielsweise 15° von der einen Übergabestelle zur nächsten Übergabestelle gedreht und/oder geschwenkt.

Dabei ist bevorzugt eine Greifeinrichtung (in einer Standardausführung) auf einer beweglichen Befestigungsplatte montiert. Diese Befestigungsplatte wird bevorzugt in einer Aktivierungszone bzw. Rückstellzone jeweils um einen festen Winkel (beispielsweise mit einer Anschlagposition) bewegt. Dabei ist es möglich, dass alle Transporteinheiten jeweils die gleichen Verschiebewinkel aufweisen, es wäre jedoch auch unterschiedliche Verschiebewinkel pro Stern möglich.

Weiterhin ist es möglich, dass die Erfindung über bereits in der Aseptik eingesetzte Materialien und Mechaniken gelöst werden kann. Auf diese Weise wird eine hygienische Ausführung gewährleistet (es kann aber auf die gleiche Technik wie bei Klammersternen zum Öffnen und Schließen zurückgegriffen werden). Auch ist es möglich, die Erfindung bei bestehenden Anlagen mit akzeptablem Aufwand nachzurüsten.

Bevorzugt ist eine Schwenkebene, in der die Greifeinrichtung gegenüber deren Trägern schwenkbar sind, parallel zu einer Transportebene der Kunststoffbehältnisse. Besonders bevorzugt ist diese Schwenkebene senkrecht zu einer Längsrichtung der von den Greifeinrichtungen gehaltenen Kunststoffbehältnisse.

Bei einer bevorzugten Ausführungsform verläuft eine geometrisch Schwenkachse, bezüglich der die Greifeinrichtung gegenüber dem Träger schwenkbar ist, durch eine von dem Träger gebildete Ebene.

Besonders bevorzugt handelt es sich bei dem beweglichen Träger der Transporteinheit um einen um eine vorgegebene Drehachse drehbaren Träger. Besonders bevorzugt werden daher die Kunststoffbehältnisse entlang einer im Wesentlichen kreisförmigen Transportbahn bzw. eines im Wesentlichen kreisförmigen Transportpfades bewegt. Bei dieser Kreisförmigkeit werden Abweichungen, welche sich durch die Schwenkbewegung der Greifeinrichtung ergeben vernachlässigt.

Besonders bevorzugt handelt es sich bei den Transporteinheiten um Transporträder und/oder Transportsterne. Bevorzugt weisen diese eine an dem drehbaren Träger angeordnete Vielzahl an Greifeinrichtungen auf. Bevorzugt sind diese Greifeinrichtungen dazu geeignet und bestimmt, die Kunststoffbehältnisse im Bereich der Mündung zu greifen, insbesondere unterhalb des Tragrings dieser Kunststoffbehältnisse.

Bei einer weiteren vorteilhaften Ausführungsform weist die zweite Transporteinrichtung eine dritte Transporteinheit auf und diese dritte Transporteinheit weist wiederum einen beweglichen Träger auf, an dem eine Vielzahl von Greifeinrichtungen angeordnet ist, welche dazu geeignet und bestimmt sind, die Kunststoffbehältnisse zu greifen.

Bei dieser Ausgestaltung werden die Kunststoffbehältnisse insbesondere nacheinander von den drei Transporteinheiten transportiert und bevorzugt von einer ersten dieser Transporteinheiten an eine zweite dieser Transporteinheiten und bevorzugt von der zweiten dieser Transporteinheiten an die dritte dieser Transporteinheiten übergeben.

Weiterhin ist es möglich, dass die besagten Transporteinheiten die Kunststoffbehältnisse nicht nur transportieren, sondern während des Transports der Kunststoffbehältnisse mit den Transporteinheiten noch weitere Behandlungsvorgänge an den Kunststoffbehältnissen durchgeführt werden, wobei bevorzugt diese weiteren Behandlungsvorgänge.

Sie können entlang des Transportpfads, entlang dessen die Kunststoffbehältnisse transportiert werden, Behandlungsaggregate vorgesehen sein, welche aus einer Gruppen von Behandlungsaggregaten ausgewählt sind welche Sterilisationsaggregate zum Sterilisieren der Kunststoffbehältnisse, Inspektionsaggregate zum Inspizieren der Kunststoffbehältnisse, Etikettieraggregate zum Etikettieren der Kunststoffbehältnisse, Druckaggregate zum Bedrucken der Kunststoffbehältnisse, Kühlaggregate zum Kühlen von Abschnitten der Kunststoffbehältnisse und dergleichen enthält.

Bevorzugt sind die besagten Transporteinheiten entlang des Transportpfads der Kunststoffbehältnisse hintereinander angeordnet. Besonders bevorzugt ist auch diese dritte Transporteinheit derart ausgestaltet, dass die Greifeinrichtung schwenkbar gegenüber dem besagten Träger angeordnet ist, um auch auf diese Weise den Schwenkwinkel weiter zu erhöhen.

Besonders bevorzugt ist der vorgegebene Schwenkwinkel größer als 5°, bevorzugt größer als 10° und bevorzugt größer oder gleich 15°. Einer weiteren vorteilhaften Ausgestaltung ist der vorgegebene Schwenkwinkel kleiner als 80°, bevorzugt kleiner als 60°, bevorzugt kleiner als 40°, bevorzugt kleiner als 30° und besonders bevorzugt kleiner als 20°.

Die Anmelderin hat ermittelt, dass Winkelbereiche zwischen 10° und 20° einerseits ausreichend groß sind, um einen hinreichenden Schwenkwinkel zu erreichen und dass diese andererseits noch in vorteilhafter Weise bewerkstelligt werden können, ohne dass es zu erhöhten Problemen bei der Übergabe bzw. Weitergabe der Kunststoffbehältnisse kommt.

Besonders bevorzugt ist der vorgegebene Schwenkwinkel einstellbar. So wäre es beispielsweise möglich, dass an allen Transporteinheiten ein Schwenkwinkel von 15° eingestellt wird, es wäre jedoch auch möglich, dass je nach Bedarf dieser Schwenkwinkel verringert oder vergrößert wird. Diese Einstellung kann beispielsweise durch das Einstellen von Anschlägen erfolgen, welche die Schwenkbewegung der Greifeinrichtung begrenzen.

Besonders bevorzugt ist die Schwenkung dieser Greifeinrichtungen mechanisch limitiert, insbesondere durch Anschläge. Besonders bevorzugt kann das Schwenken der Greifeinrichtungen gegenüber dem Träger durch eine mechanische Führung erfolgen, beispielsweise durch entsprechende Nocken. Dies wird untenstehend genauer erläutert.

Auf diese Weise ist es möglich, dass mit relativ einfachen Mitteln eine definierte und genaue Schwenkstellung der Greifeinrichtungen erreicht wird. Es wäre jedoch auch möglich, dass elektromotorische Antriebe vorgesehen sind, welche die besagte Schwenkung der Greifeinrichtung gegenüber dem Träger bewirken.

Bei einer weiteren bevorzugten Ausführungsform weist wenigstens eine Transporteinheit mechanische Stellglieder auf, welche die Schwenkbewegung der Greifeinrichtungen gegenüber deren Träger bewirken.

Bevorzugt ist die Umformungseinrichtung dazu geeignet und bestimmt, Kunststoffbehältnisse zu formen, welche einen Grundkörper mit einem von einem kreisförmigen Querschnitt abweichenden Querschnitt aufweisen. Besonders bevorzugt ist dieser abweichende Querschnitt aus einer Gruppe von Querschnitten ausgewählt, welche ovale Querschnitte, polygonale Querschnitte und dergleichen enthält. Dabei bleibt jedoch üblicherweise der Mündungsbereich der Behältnisse gleich und weist nach wie vor einen kreisrunden Querschnitt auf. Der Grundkörper der Behältnisse, der insbesondere das Volumen aufnimmt, weist den besagten abweichenden Querschnitt auf.

Besonders bevorzugt handelt es sich bei der Umformungseinrichtung um eine Blasformmaschine und insbesondere eine Streckblasmaschine. Diese weist bevorzugt ebenfalls einen drehbaren Träger auf, an dem eine Vielzahl von Umformungsstationen angeordnet ist. Diese Umformungsstationen weisen dabei bevorzugt jeweils Blasformen auf, die geöffnet und geschlossen werden können, um in ihrem Inneren die Kunststoffbehältnisse auszubilden.

Daneben weisen diese Umformungsstationen bevorzugt Beaufschlagungseinrichtungen auf, welche die Kunststoffvorformlinge zu deren Expansion mit einem fließfähigen und insbesondere gasförmigen Medium beaufschlagen. Besonders bevorzugt weist die Umformungseinrichtung einen stangenförmigen Körper auf, der in die Kunststoffvorformlinge einführbar ist, insbesondere eine sogenannte Reckstange.

Bei einer weiteren vorteilhaften Ausführungsform weist die Vorrichtung einen Reinraum auf, innerhalb dessen die Kunststoffvorformlinge und/oder die Kunststoffbehältnisse wenigstens abschnittsweise transportiert werden. Bevorzugt erfolgt der Umformungsprozess der Kunststoffvorformlinge innerhalb dieses Reinraums.

Die vorliegende Erfindung eignet sich, wie oben erwähnt, insbesondere bei solchen Anwendungen, da die Transporteinrichtungen derart gestaltet sein können, dass sie die gefertigten Behältnisse nicht an und insbesondere nicht in den Mündungen greifen müssen. Auch ist bevorzugt nicht vorgesehen, dass Kunststoffbehältnisse bezüglich ihren Halteeinrichtungen bzw. Greifeinrichtungen gedreht werden müssen, sondern sie werden, wie oben erwähnt, insbesondere mit den Greifeinrichtungen gedreht.

Besonders bevorzugt erstreckt sich der Reinraum auch über die besagte zweite Transporteinrichtung hinweg. Besonders bevorzugt ist auch die Fülleinrichtung in dem besagten Reinraum angeordnet.

Besonders bevorzugt sind die weiteren Transporteinheiten der zweiten Transporteinrichtung derart ausgebildet, dass sie zumindest teilweise gegenüber Sterilisationsmitteln wie beispielsweise H₂O₂ beständig sind. Bei einer bevorzugten Ausführungsform weist die Vorrichtung Überdruckerzeugungseinrichtungen auf, welche den Reinraum unter einem Überdruck (gegenüber der Umgebung) halten. Besonders bevorzugt weist die Vorrichtung auch wenigstens eine hydraulische Abdichtung auf, welche den Reinraum gegenüber einer Umgebung abdichtet. So können beispielsweise sogenannte Wasserschlösser vorgesehen sein, um den Reinraum gegenüber der Umgebung abzudichten.

Bevorzugt sind die Greifeinrichtungen Greifklammern, welche die Kunststoffbehältnisse an ihrer Außenoberfläche greifen. Dies ist insbesondere für sterile Anwendungen vorteilhaft.

Die vorliegende Erfindung ist weiterhin auf ein Verfahren zum Herstellen von Behältnissen und insbesondere von mit einem fließfähigen Medium befüllten Behältnissen gerichtet. Dabei formt eine Umformungseinrichtung Kunststoffvorformlinge zu Kunststoffbehältnissen um, wobei die Umformungseinrichtung eine erste Transporteinrichtung aufweist, welche die Kunststoffvorformlinge während deren Umformung transportiert, und wobei in der Transportrichtung der Kunststoffbehältnisse nach der Umformungseinrichtung eine Fülleinrichtung angeordnet ist, welche die Behältnisse mit einem fließfähigen Medium und insbesondere einer Flüssigkeit befüllt.

Weiterhin ist eine zweite Transporteinrichtung vorgesehen, welche die Behältnisse von der Umformungseinrichtung zu der Fülleinrichtung transportiert, wobei die zweite Transporteinrichtung wenigstens eine erste Transporteinheit und eine zweite Transporteinheit aufweist, welche die Kunststoffbehältnisse transportieren und welche sie insbesondere nacheinander transportieren. Weiterhin weisen diese beiden Transporteinheiten jeweils einen bewegbaren und insbesondere drehbaren Träger auf, an denen jeweils eine Vielzahl von Greifeinrichtung angeordnet ist, welche die Kunststoffbehältnisse greifen.

Erfindungsgemäß sind diese Greifeinrichtungen jeweils schwenkbar gegenüber diesen Trägern angeordnet, derart das eine Greifeinrichtung mit einem von dieser Greifeinrichtung gehaltenen Kunststoffbehältnis um einen vorgegebenen Schwenkwinkel - insbesondere während des Transports - geschwenkt wird.

Bei einem bevorzugten Verfahren erfolgt eine Drehung der Kunststoffbehältnisse während des Transports mit der zweiten Transporteinrichtung. Dabei erfolgt diese Drehung insbesondere stufenweise und/oder abschnittsweise. So ist es möglich, dass die Kunststoffbehältnisse von der ersten Transporteinheit um einen vorgegebenen Schwenkwinkel geschwenkt und/oder gedreht werden und anschließend von der zweiten Transporteinheit wieder um einen vorgegebenen Dreh oder Schwenkwinkel gedreht und/oder geschwenkt werden.

Dabei bezieht sich der Begriff des Schwenkens oder Drehens der Kunststoffbehältnisse auf eine Drehung bezüglich deren eigener Achse. Die Drehung, welche durch die Bewegung auf der Transporteinheit bewerkstelligt wird, wird hierbei nicht berücksichtigt. Falls beispielsweise die Kunststoffbehältnisse mit der Transporteinheit um einen Umfangswinkel von 300° transportiert werden, so wird auch hierdurch eine Drehung der Kunststoffbehältnisse um ihre eigene Längsachse um 300° bewirkt. Die vorliegende Erfindung bezieht sich jedoch nicht auf diese Drehung, sondern auf eine Drehung der Kunststoffbehältnisse bezüglich der jeweiligen Transporteinheit und/oder bezüglich des drehbaren Trägers der Transporteinheit.

Bei einem bevorzugten Verfahren wird die Greifeinrichtung mit den daran angeordneten Kunststoffbehältnissen um den vorgegebenen Winkel gegenüber dem Träger von einer ersten Schwenkposition in eine zweite Schwenkposition geschwenkt. Bevorzugt werden anschließend die Greifeinrichtungen ohne daran gehaltene Kunststoffbehältnisse von der zweiten Schwenkposition in die erste Schwenkposition (zurück) geschwenkt.

Bevorzugt werden die Greifeinrichtungen gemeinsam mit den von diesen gegriffenen Kunststoffbehältnissen geschwenkt. Bevorzugt werden die Kunststoffbehältnisse nicht bezüglich der sie greifenden Greifeinrichtungen gedreht oder geschwenkt.

Weitere Vorteile und Ausführungsformen ergeben sich aus den beigefügten Zeichnungen:
Darin zeigen:
- Fig. 1: eine schematische Darstellung einer erfindungsgemäßen Vorrichtung;
- Fig. 2: eine Darstellung der zweiten Transporteinrichtung mit drei Transporteinheiten;
- Fig. 3: eine Darstellung zur Veranschaulichung der Schwenkbewegung.

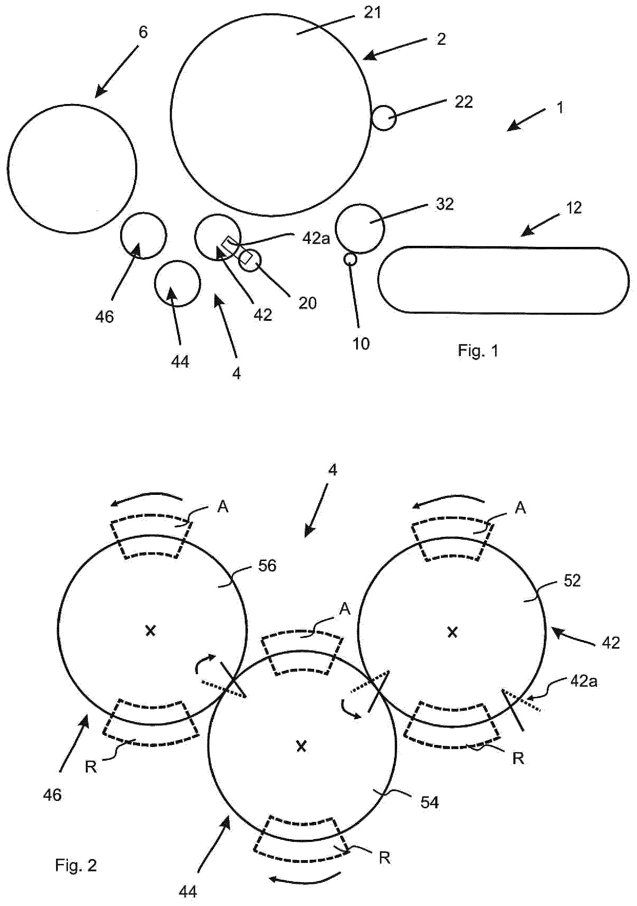

Figur 1 zeigt eine schematische Darstellung einer erfindungsgemäßen Vorrichtung 1. Diese weist eine Erwärmungseinrichtung 12, wie einen Infrarotofen auf, der Kunststoffvorformlinge 10 erwärmt. Anschließend werden diese Kunststoffvorformlinge mittels eines Transportsterns 32 zu der Umformungseinrichtung 2 übergeben. Diese weist einen drehbaren Träger 21 auf, an dem eine Vielzahl von Umformungsstationen 22 angeordnet ist. Nach der Umformung werden die gefertigten Kunststoffbehältnisse 20 mit einer zweiten Transporteinrichtung 4 zu einer Fülleinrichtung 6 transportiert. Diese zweite Transporteinrichtung 4 weist hier drei Transporteinheiten 42, 44 und 46 auf, die jeweils mit Greifeinrichtungen 42a zum Greifen der Kunststoffbehältnisse 20 ausgestattet sind.

Figur 2 zeigt eine Darstellung der zweiten Transporteinrichtung 4 und der dadurch bewirkten Schwenkbewegung. Man erkennt hier wieder die Greifeinrichtung 42a (nur schematisch dargestellt), welche Bestandteil der ersten Transporteinheit 42 ist, und die an einen Träger 52 angeordnet ist. Die von der Greifeinrichtung 42 gegriffen Behältnisse werden in einem Schwenkbereich A um einen vorgegebenen Schwenkwinkel, beispielsweise 15° mit den Greifeinrichtungen geschwenkt.

Anschließend werden die Kunststoffbehältnisse an die zweite Transporteinheit 44 übergeben. Schließlich wird in einem Rückstellbereich R die Greifeinrichtung wieder zurückgeschwenkt in die Ausgangsposition, in der ein weiteres Kunststoffbehältnis aufgenommen werden kann.

Auch mittels der Transporteinheit 44 werden die Kunststoffbehältnisse in dem Bereich A wiederum mit den Greifeinrichtungen um einen vorgegebenen Schwenkwinkel geschwenkt und anschließend an die dritte Transporteinheit 46 übergeben. Auch während des Transports mittels dieser Transporteinheit 46 findet in dem Bereich A ein Schwenken der Greifeinrichtungen mit den daran gehaltenen Kunststoffbehältnissen statt, sowie auch in dem Bereich R ein Rückschwenken der nunmehr unbesetzten Greifeinrichtungen.

Auf diese Weise werden in der Gesamtheit die Kunststoffbehältnisse durch diesen Transport nicht nur weiter transportiert, sondern auch um 3x einen vorgegebenen Winkel, Beispiel Weise 3x 45° gedreht.

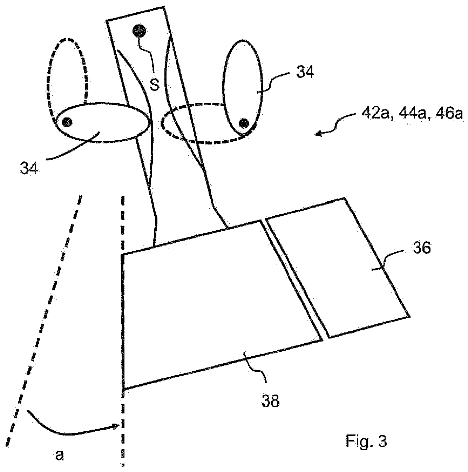

Figur 3 zeigt eine schematische Darstellung der erfindungsgemäßen Vorrichtung. Dabei ist hier wiederum ein Träger 38 gezeigt, an dem ein Greifelement wie eine Greifklammer (nicht gezeigt) angeordnet ist. Dieser Träger 38 ist bezüglich einer Schwenkachse S um einen vorgegebenen Schwenkwinkel schwenkbar. Zu diesem Zweck können zwei Stellnocken 34 vorgesehen sein, die jeweils diese Schwenkbewegung bewirken. Das Bezugszeichen 36 kennzeichnet einen Anschlag, der die Schwenkbewegung des Trägers 38 bezüglich der Schwenkachse S beschränkt. Dabei wäre es möglich, dass durch eine Veränderung der Position des Anschlags 36 auch der maximale Schwenkwinkel des Trägers 38 und damit der Greifeinrichtungen 42a, 44a, 46a verändert wird.

## Patentansprüche

1. Vorrichtung (1) zum Herstellen von Kunststoffbehältnissen und insbesondere Getränkebehältnissen mit einer Umformungseinrichtung (2), welche Kunststoffvorformlinge (10) zu Kunststoffbehältnissen umformt, wobei die Umformungseinrichtung (2) eine erste Transporteinrichtung aufweist, welche die Kunststoffvorformlinge während deren Umformung transportiert und mit einer in der Transportrichtung (T) der Kunststoffbehältnisse nach der Umformungseinrichtung (2) angeordneten Fülleinrichtung (6), welche die Kunststoffbehältnisse mit einer Flüssigkeit befüllt, wobei die Vorrichtung eine weitere zweite Transporteinrichtung (4) aufweist, welche die Behältnisse von der Umformungseinrichtung (2) zu der Fülleinrichtung (6) transportiert, wobei die zweite Transporteinrichtung wenigstens eine erste Transporteinheit (42) und eine zweite Transporteinheit (44) aufweist, welche die Kunststoffbehältnisse (25) transportieren, wobei diese zwei Transporteinheiten (42, 44) jeweils einen bewegbaren Träger (52, 54) aufweisen, an denen jeweils eine Vielzahl von Greifeinrichtungen angeordnet sind, welche dazu geeignet und bestimmt sind, die Kunststoffbehältnisse zu greifen,
**dadurch gekennzeichnet, dass**
diese Greifeinrichtungen (42a, 44a) jeweils schwenkbar gegenüber diesen Trägern (52, 54) angeordnet sind, derart dass eine Greifeinrichtung (42a, 44a) mit einem von dieser Greifeinrichtung gehaltenen Kunststoffbehältnis (25) um einen vorgegebenen Schwenkwinkel (a) schwenkbar ist.

2. Vorrichtung (1) nach Anspruch 1,
**dadurch gekennzeichnet, dass**
eine Schwenkebene, in der die Greifeinrichtungen (42a, 44a) gegenüber den Trägern (52, 54) schwenkbar sind parallel zu einer Transportebene der Kunststoffbehältnisse (25) angeordnet ist.

3. Vorrichtung (1) nach wenigstens einem der vorangegangenen Ansprüche,
**dadurch gekennzeichnet, dass**
ein beweglicher Träger wenigstens einer Transporteinheit ein um eine vorgegebene Drehachse drehbarer Träger ist.

4. Vorrichtung (1) nach wenigstens einem der vorangegangenen Ansprüche,
**dadurch gekennzeichnet, dass**
die zweite Transporteinrichtung (4) eine dritte Transporteinheit (46) aufweist und diese dritte Transporteinheit (46) einen bewegbaren Träger (56) aufweist, an dem eine Vielzahl von Greifeinrichtungen angeordnet ist, welche dazu geeignet und bestimmt sind, die Kunststoffbehältnisse zu greifen.

5. Vorrichtung (1) nach wenigstens einem der vorangegangenen Ansprüche,
**dadurch gekennzeichnet, dass**
der vorgegebene Schwenkwinkel größer ist als 5°, bevorzugt größer als 10° und bevorzugt größer oder gleich 15° und/oder der vorgegebene Schwenkwinkel kleiner ist als 80°, bevorzugt kleiner als 60°, bevorzugt kleiner als 40°, bevorzugt kleiner als 30° und besonders bevorzugt kleiner als 20°.

6. Vorrichtung (1) nach wenigstens einem der vorangegangenen Ansprüche,
**dadurch gekennzeichnet, dass**
die Umformungseinrichtung dazu geeignet ist, Kunststoffbehältnisse (25) zu formen, welche einen Grundkörper mit einem von einem kreisförmigen Querschnitt abweichenden Querschnitt aufweisen.

7. Vorrichtung (1) nach wenigstens einem der vorangegangenen Ansprüche,
**dadurch gekennzeichnet, dass**
die Vorrichtung (1) einen Reinraum aufweist, innerhalb dessen die Kunststoffvorformlinge (10) und/oder die Kunststoffbehältnisse wenigstens abschnittsweise transportiert werden.

8. Vorrichtung (1) nach wenigstens einem der vorangegangenen Ansprüche,
**dadurch gekennzeichnet, dass**
die Greifeinrichtungen Greifklammern sind, welche die Behältnisse an ihrer Außenoberfläche greifen und insbesondere an einem Mündungsbereich der Behältnisse.

9. Verfahren zum Herstellen von Kunststoffbehältnissen und insbesondere von Getränkebehältnissen wobei eine Umformungseinrichtung (2) Kunststoffvorformlinge (10) zu Kunststoffbehältnissen umformt, wobei die Umformungseinrichtung (2) eine erste Transporteinrichtung aufweist, welche die Kunststoffvorformlinge während deren Umformung transportiert und wobei eine in der Transportrichtung der Kunststoffbehältnisse nach der Umformungseinrichtung (2) angeordnete Fülleinrichtung (6) die Kunststoffbehältnisse mit einer Flüssigkeit befüllt, wobei die Vorrichtung eine weitere zweite Transporteinrichtung (4) aufweist, welche die Behältnisse von der Umformungseinrichtung (2) zu der Fülleinrichtung (6) transportiert, wobei die zweite Transporteinrichtung wenigstens eine erste Transporteinheit (42) und eine zweite Transporteinheit (44) aufweist, welche die Kunststoffbehältnisse (25) transportieren, wobei diese zwei Transporteinheiten (42, 44) jeweils einen bewegbaren Träger (52, 54) aufweisen, an denen jeweils eine Vielzahl von Greifeinrichtungen angeordnet ist, welche die Kunststoffbehältnisse greifen,
**dadurch gekennzeichnet, dass**
diese Greifeinrichtungen (42a, 44a) jeweils schwenkbar gegenüber diesen Trägern (52, 54) angeordnet sind, derart dass eine Greifeinrichtung (42a, 44a) mit einem von dieser Greifeinrichtung gehaltenen Kunststoffbehältnis (25) um einen vorgegebenen Schwenkwinkel (a) geschwenkt wird.

10. Verfahren nach Anspruch 9,
**dadurch gekennzeichnet, dass**
die Greifeinrichtung mit den daran angeordneten Kunststoffbehältnissen um den vorgegebenen Winkel gegenüber dem Träger von einer ersten Schwenkposition in eine zweite Schwenkposition geschwenkt werden und anschließend die Greifeinrichtungen ohne daran gehaltene Kunststoffbehältnisse von der zweiten Schwenkposition in die erste Schwenkposition geschwenkt werden.

## Claims

1. An apparatus (1) for producing plastic containers and in particular beverage containers, having a forming device (2) which forms plastic preforms (10) into plastic containers, wherein the forming device (2) having a first transport device which transports the plastic preforms during their forming and with a filling device (6) which is arranged downstream of the forming device (2) in the transport direction (T) of the plastic containers and fills the plastic containers with a liquid, wherein the apparatus having a further second transport device (4) which transports the containers from the forming device (2) to the filling device (6), wherein the second transport device having at least a first transport unit (42) and a second transport unit (44) which transport the plastic containers (25), wherein these two transport units (42, 44) each having a movable carrier (52, 54), on each of which a plurality of gripping devices are arranged, which are suitable and intended for gripping the plastic containers,
**characterized in that**
these gripping devices (42a, 44a) are each arranged pivotably with respect to these carriers (52, 54) in such a way that a gripping device (42a, 44a) with a plastic container (25) held by this gripping device can be pivoted with respect to a predetermined pivot angle (a).

2. The apparatus (1) according to claim 1,
**characterized in that**
a pivot plane in which the gripping devices (42a, 44a) are pivotable relative to the carriers (52, 54) is arranged parallel to a transport plane of the plastic containers (25).

3. The apparatus (1) according to at least one of the preceding claims, **characterized in that**
a movable carrier of at least one transport unit is a carrier rotatable about a predetermined axis of rotation.

4. The apparatus (1) according to at least one of the preceding claims, **characterized in that**
the second transport device (4) comprises a third transport unit (46) and said third transport unit (46) comprises a movable carrier (56) on which a plurality of gripping devices are arranged which are suitable and intended for gripping the plastic containers.

5. The apparatus (1) according to at least one of the preceding claims, **characterized in that**
the predetermined pivot angle is greater than 5°, preferably greater than 10° and preferably greater than or equal to 15° and/or the predetermined pivot angle is less than 80°, preferably less than 60°, preferably less than 40°, preferably less than 30° and particularly preferably less than 20°.

6. The apparatus (1) according to at least one of the preceding claims, **characterized in that**
the forming device is suitable to form plastic containers (25) having a main body with a cross-section deviating from a circular cross-section.

7. The apparatus (1) according to at least one of the preceding claims, **characterized in that**
the apparatus (1) has a clean room within which the plastic preforms (10) and/or the plastic containers are transported at least in sections.

8. The apparatus (1) according to at least one of the preceding claims, **characterized in that**
the gripping devices are gripping clamps which grip the containers at their outer surface and in particular a mouth area of the containers.

9. A method for producing plastic containers and in particular beverage containers, wherein a forming device (2) forms plastic preforms (10) into plastic containers, wherein the forming device (2) has a first transport device which transports the plastic preforms during their forming and wherein a filling device (6) arranged in the transport direction of the plastic containers downstream of the forming device (2) fills the plastic containers with a liquid, wherein the apparatus having a further second transport device (4) which transports the containers from the forming device (2) to the filling device (6), wherein the second transport device having at least a first transport unit (42) and a second transport unit (44) which transport the plastic containers (25), wherein these two transport units (42, 44) each having a movable carrier (52, 54), on each of which a plurality of gripping devices are arranged, which grip the plastic containers,
**characterized in that**
these gripping devices (42a, 44a) are each arranged pivotably with respect to these carriers (52, 54) in such a way that a gripping device (42a, 44a) with a plastic container (25) held by this gripping device is pivoted with respect to a predetermined pivot angle (a).

10. The method according to claim 9,
**characterized in that**
the gripping device with the plastic containers arranged thereon are pivoted through the predetermined angle relative to the carrier from a first pivot position into a second pivot position and then the gripping devices without plastic containers held thereon are pivoted from the second pivot position into the first pivot position.

## Revendications

1. Dispositif (1) de fabrication de récipients en matière plastique et en particulier de récipients de boisson avec un système de façonnage (2), lequel façonne des préformes en matière plastique (10) en des récipients en matière plastique, dans lequel le système de façonnage (2) présente un premier système de transport, lequel transporte les préformes en matière plastique pendant leur façonnage, et avec un système de remplissage (6) disposé dans la direction de transport (T) des récipients en matière plastique après le système de façonnage (2), lequel remplit les récipients en matière plastique avec un liquide, dans lequel le dispositif présente un autre deuxième système de transport (4), lequel transporte les récipients depuis le système de façonnage (2) au système de remplissage (6), dans lequel le deuxième système de transport présente au moins une première unité de transport (42) et une deuxième unité de transport (44), lesquelles transportent les récipients en matière plastique (25), dans lequel lesdites deux unités de transport (42, 44) présentent respectivement un support (52, 54) pouvant être déplacé, sur lequel sont disposés respectivement une pluralité de systèmes de préhension, lesquels sont adaptés et se destinent à saisir les récipients en matière plastique,
**caractérisé en ce que**
lesdits systèmes de préhension (42a, 44a) sont disposés de manière à pouvoir pivoter respectivement par rapport auxdits supports (52, 54) de telle manière qu'un système de préhension (42a, 44a) avec un récipient en matière plastique (25) maintenu par ledit système de préhension peut être pivoté autour d'un angle de pivotement (a) prédéfini.

2. Dispositif (1) selon la revendication 1,
**caractérisé en ce que**
un plan de pivotement, dans lequel les systèmes de préhension (42a, 44a) peuvent être pivotés par rapport aux supports (52, 54), est disposé de manière parallèle par rapport à un plan de transport des récipients en matière plastique (25).

3. Dispositif (1) selon au moins l'une quelconque des revendications précédentes,
**caractérisé en ce que**
un support mobile d'au moins une unité de transport est un support pouvant tourner autour d'un axe de rotation prédéfini.

4. Dispositif (1) selon au moins l'une quelconque des revendications précédentes,
**caractérisé en ce que**
le deuxième système de transport (4) présente une troisième unité de transport (46) et ladite troisième unité de transport (46) présente un support (56) pouvant être déplacé, sur lequel une pluralité de systèmes de préhension est disposée, laquelle est adaptée pour et se destine à saisir les récipients en matière plastique.

5. Dispositif (1) selon au moins l'une quelconque des revendications précédentes,
**caractérisé en ce que**
l'angle de pivotement prédéfini est supérieur à 5°, de manière préférée est supérieur à 10° et de manière préférée est supérieur ou égal à 15° et/ou l'angle de pivotement prédéfini est inférieur à 80°, de manière préférée est inférieur à 60°, de manière préférée est inférieur à 40°, de manière préférée est inférieur à 30° et de manière particulièrement préférée est inférieur à 20°.

6. Dispositif (1) selon au moins l'une quelconque des revendications précédentes,
**caractérisé en ce que**
le système de façonnage est adapté pour former des récipients en matière plastique (25), lesquels présentent un corps de base avec une section transversale s'écartant d'une section transversale circulaire.

7. Dispositif (1) selon au moins l'une quelconque des revendications précédentes,
**caractérisé en ce que**
le dispositif (1) présente une salle blanche, à l'intérieur de laquelle les préformes en matière plastique (10) et/ou les récipients en matière plastique sont transportés au moins par endroits.

8. Dispositif (1) selon au moins l'une quelconque des revendications précédentes,
**caractérisé en ce que**
les systèmes de préhension sont des pinces de préhension, lesquelles saisissent les récipients sur leur surface extérieure et en particulier sur une zone d'embouchure des récipients.

9. Procédé de fabrication de récipients en matière plastique et en particulier de récipients de boisson, dans lequel un système de façonnage (2) façonne des préformes en matière plastique (10) en des récipients en matière plastique, dans lequel le système de façonnage (2) présente un premier système de transport, lequel transporte les préformes en matière plastique pendant leur façonnage et dans lequel un système de remplissage (6) disposé dans la direction de transport des récipients en matière plastique après le système de façonnage (2) remplit les récipients en matière plastique avec un liquide, dans lequel le dispositif présente un autre deuxième système de transport (4), lequel transporte les récipients depuis le système de façonnage (2) au système de remplissage (6), dans lequel le deuxième système de transport présente au moins une première unité de transport (42) et une deuxième unité de transport (44), lesquelles transportent les récipients en matière plastique (25), dans lequel lesdites deux unités de transport (42, 44) présentent respectivement un support (52, 54) pouvant être déplacé, sur lequel respectivement une pluralité de systèmes de préhension est disposée, lesquels saisissent les récipients en matière plastique,
**caractérisé en ce que**
lesdits systèmes de préhension (42a, 44a) sont disposés respectivement de manière à pouvoir pivoter par rapport auxdits supports (52, 54) de telle manière qu'un système de préhension (42a, 44a) avec un récipient en matière plastique (25) maintenu par ledit système de préhension est pivoté autour d'un angle de pivotement (a) prédéfini.

10. Procédé selon la revendication 9,
**caractérisé en ce que**
les systèmes de préhension avec les récipients en matière plastique disposés sur celui-ci sont pivotés depuis une première position de pivotement dans une deuxième position de pivotement par rapport au support autour de l'angle prédéfini puis les systèmes de préhension sans récipients en matière plastique maintenus sur ceux-ci sont pivotés depuis la deuxième position de pivotement dans la première position de pivotement.
